# EUROPEAN PATENT APPLICATION

(11) **EP 4 311 100 A1**
(43) Date of publication of application: **24.01.2024**
(21) Application number: 21930801.2
(22) Date of filing: 18.03.2021
(51) Int. Cl.: H02P 6/24, B25F 5/00

(54) **ELECTRIC TOOL AND PROTECTION METHOD AND SYSTEM THEREFOR**

(71) Applicant: Techtronic Cordless GP, Anderson, SC 29621 (US)
(72) Inventor: SUN, Kaijia, Dongguan, Guangdong 523945 (CN); MA, Haibo, Hong Kong (HK); WEN, Chao, Dongguan, Guangdong 523945 (CN); LI, Yongmin, Dongguan, Guangdong 523945 (CN); XIE, Huanfa, Dongguan, Guangdong 523945 (CN)
(74) Representative: Novagraaf Group
(86) International application number: PCT/CN2021/081442
(87) International publication number: WO 2022/193208

(57) **Abstract**

The present invention relates to an electric tool and a system and method for protecting an electric tool to prevent misuse of same. The system comprises: at least one sensor, which detects at least one operating state of an electric tool; and a processor, which is configured to: determine, on the basis of the at least one operating state of the electric tool, whether a predetermined failure mode is detected, accumulate a count value if a predetermined failure mode is detected, determine whether the count value exceeds a predetermined threshold value, and enter an abuse protection mode if the count value exceeds the predetermined threshold value.

## Description

### Technical Field

The present invention relates to electric tools, in particular to a method and system for protecting an electric tool.

### Background Art

An electric tool generally comprises a housing, an electric motor located in the housing, a transmission mechanism driven by the electric motor, and a control assembly for controlling the electric motor. Electric tools usually comprise a tool temperature sensor, for detecting the temperature of components such as MOSFETs of a switching network, or the temperature of the motor. However, due to a conduction time delay of the tool temperature sensor, there is a temperature difference between the temperature detected by the tool temperature sensor and the actual temperature of components such as MOSFETs of the switching network or the actual temperature of the motor. In particular, when a user frequently triggers a fault intentionally or due to misoperation within a short period of time, the temperature difference will be greater, and consequently, the temperature protection of the electric tool will not be able to protect the tool in time; if work is continued at a high current at this time, the tool will be damaged.

In addition, electric tools usually also comprise an ambient temperature sensor, for detecting the temperature of the operating environment of the electric tool. When the temperature measured by the ambient temperature sensor is higher than a predetermined ambient temperature threshold (for example, but without limitation, 30°C) and/or the temperature measured by the tool temperature sensor is higher than a predetermined tool temperature threshold (for example, but without limitation, 60°C), an operating mode of the electric tool is set to a high-temperature operating mode. When the electric tool is in the high-temperature operating mode, if the user frequently triggers a fault intentionally or due to misoperation, this will also aggravate the damage suffered by the electric tool. Therefore, there is a need to protect the electric tool to prevent or prohibit such abuse by the user, so as to prolong the life of the electric tool.

### Summary of the Invention

It is an object of the present invention to provide a method and system for protecting an electric tool to prevent or prohibit abuse. By detecting that the electric tool enters a fault state frequently within a predetermined time or when in a predetermined operating mode, the present invention causes the electric tool to enter abuse protection and shut down for a period of time, such that while the electric tool is cooling, the temperature difference between a tool temperature sensor and the actual temperature of a detected element is also reduced, to protect the electric tool in a more timely manner and avoid damage to the electric tool.

In one aspect, the present invention provides a system for protecting an electric tool to prevent abuse, comprising:
at least one sensor, for detecting at least one operating state of the electric tool; and
a processor, configured to:
   determine whether a predetermined fault mode is detected, based on at least one operating state of the electric tool;
   increment a count value if a predetermined fault mode is detected;
   determine whether the count value exceeds a predetermined threshold; and
   enter an abuse protection mode if the count value exceeds the predetermined threshold.

Preferably, the at least one sensor comprises:
a speed sensor, for measuring a speed of an electric motor; and/or
a current sensor, for measuring a current passing through an electric motor of the electric tool; and/or
a tool temperature sensor, for measuring a temperature of an electronic component of the electric tool.

Preferably, the processor is further configured to:
determine whether the speed measured by the speed sensor is lower than a first predetermined speed threshold;
detect a first predetermined fault mode if the speed measured by the speed sensor is lower than the first predetermined speed threshold; and/or
determine whether the current measured by the current sensor exceeds a first predetermined current threshold;
detect a second predetermined fault mode if the current measured by the current sensor exceeds the first predetermined current threshold; and/or
determine whether the temperature measured by the tool temperature sensor exceeds a first predetermined temperature threshold;
detect a third predetermined fault mode if the temperature measured by the tool temperature sensor exceeds the first predetermined temperature threshold.

Preferably, the abuse protection mode comprises setting a trigger switch and/or a switching network to a disconnected state, and starting a timer.

Preferably, the processor is further configured to:
determine whether the electric tool meets a recovery condition, when timing of the timer has expired; and
exit the abuse protection mode if the electric tool meets the recovery condition.

Preferably, the count value is a weighted sum of the number of times a predetermined fault mode occurs.

Preferably, the processor is configured to use different weights for different predetermined fault modes.

Preferably, the processor is configured to use different weights for different times.

Preferably, the processor is configured to use different weights for different ambient temperatures and/or tool temperatures.

Preferably, the processor is further configured to:
determine whether the temperature measured by the tool temperature sensor is less than a third predetermined temperature threshold; and
the recovery condition is met if the temperature measured by the tool temperature sensor is less than the third predetermined temperature threshold and/or a trigger is released.

Preferably, the abuse protection mode further comprises enabling an indicator. In another aspect, the present invention provides an electric tool, comprising:
a housing;
an electric motor;
a transmission mechanism driven by the electric motor; and
the system described above.

In another aspect, the present invention provides a method for protecting an electric tool to prevent abuse, comprising:
detecting at least one operating state of the electric tool;
determining whether a predetermined fault mode is detected, based on at least one operating state of the electric tool;
incrementing a count value if a predetermined fault mode is detected;
determining whether the count value exceeds a predetermined threshold; and
entering an abuse protection mode if the count value exceeds the predetermined threshold.

Preferably, the method further comprises:
measuring, by a speed sensor, a speed of the electric motor;
determining whether the speed measured by the speed sensor is lower than a first predetermined speed threshold;
detecting a first predetermined fault mode if the speed measured by the speed sensor is lower than the first predetermined speed threshold; and/or
measuring, by a current sensor, a current passing through an electric motor of the electric tool;
determining whether the current measured by the current sensor exceeds a first predetermined current threshold;
detecting a second predetermined fault mode if the current measured by the current sensor exceeds the first predetermined current threshold; and/or
measuring, by a tool temperature sensor, a temperature of an electronic component of the electric tool;
determining whether the temperature measured by the tool temperature sensor exceeds a first predetermined temperature threshold;
detecting a third predetermined fault mode if the temperature measured by the tool temperature sensor exceeds the first predetermined temperature threshold.

Preferably, the abuse protection mode comprises setting a trigger switch and/or a switching network to a disconnected state, and starting a timer.

Preferably, the method further comprises:
determining whether the electric tool meets a recovery condition, when timing of the timer has expired; and
exiting the abuse protection mode if the electric tool meets the recovery condition.

Preferably, the count value is a weighted sum of the number of times a predetermined fault mode occurs.

Preferably, different weights are used for different predetermined fault modes.

Preferably, different weights are used for different times.

Preferably, different weights are used for different ambient temperatures and/or tool temperatures.

Preferably, the method further comprises:
determining whether the temperature measured by the tool temperature sensor is less than a third predetermined temperature threshold; and
the recovery condition is met if the temperature measured by the tool temperature sensor is less than the third predetermined temperature threshold and/or a trigger is released.

Preferably, the abuse protection mode further comprises enabling an indicator.

The method and system according to the present invention can cut off the trigger switch when the user abuses the electric tool, so that the trigger switch will not be turned on even if the user presses the trigger. This can advantageously protect the electric tool, thereby prolonging the life of the electric tool.

Other exemplary embodiments of the present invention are obvious from the detailed description provided below. It should be understood that the detailed description and specific examples, while disclosing exemplary embodiments of the present invention, are intended for illustration purposes only and are not intended to limit the scope of the invention.

### Brief Description of the Drawings

At least one embodiment will be described below with reference to the following drawings, wherein identical reference numerals refer to identical elements.
Fig. 1 is a schematic drawing of an electric tool according to an embodiment of the present invention.
Fig. 2 is a simplified block diagram of an electric tool according to an embodiment of the present invention.
Fig. 3 is a flowchart of a method for protecting an electric tool according to an embodiment of the present invention.
Fig. 4 is a flowchart of a method for protecting an electric tool according to another embodiment of the present invention.

The foregoing and other features of the present disclosure will become more fully apparent from the following description and appended claims, taken in conjunction with the accompanying drawings. It should be understood that these drawings illustrate only some embodiments according to the present disclosure, and should not be regarded as limiting the scope of the disclosure, which will be described with additional features and details through the use of the drawings. Any dimensions disclosed in the drawings or elsewhere herein are for illustration purposes only.

### Detailed Description of the Invention

Embodiments of the present disclosure are described herein. It should be understood, however, that the disclosed embodiments are merely examples and that other embodiments may take different and alternative forms. The figures are not necessarily drawn to scale; some features may be exaggerated or minimized to show details of particular components. Therefore, specific structural and functional details disclosed herein should not be interpreted as limiting, but merely as a representative basis for teaching one skilled in the art to employ the present disclosure in a variety of ways. As will be understood by persons of ordinary skill in the art, various features illustrated and described with reference to any one figure may be combined with features illustrated in one or more other figures to produce embodiments which are not explicitly illustrated or described. Combinations of illustrated features provide representative embodiments for typical applications. However, various combinations and modifications of features consistent with the teachings of this disclosure may be desired for particular applications or implementations.

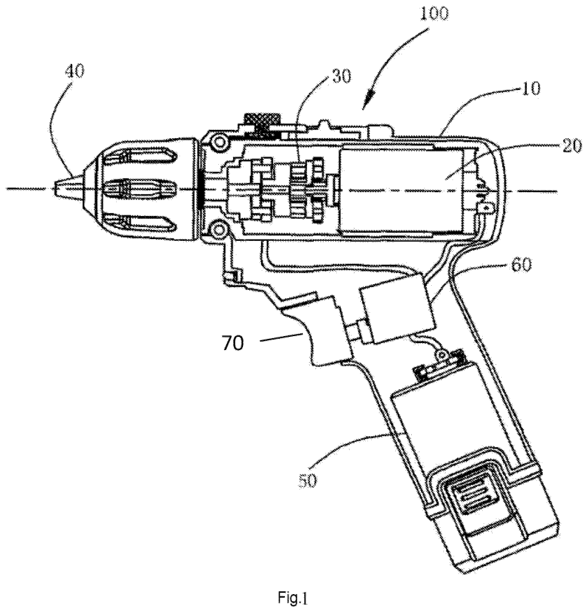

Referring to Fig. 1, an embodiment of the present invention provides an electric tool 100. The electric tool 100 has a housing 10, an electric motor 20 disposed in the housing 10, a transmission mechanism 30 connected to the electric motor 20, a chuck 40 driven by the transmission mechanism 30, a battery 50 for powering the electric motor 20, and a control assembly 60 for controlling the electric motor 20.

In this embodiment, the electric tool 100 is an electric drill. It should be understood, however, that the electric tool 100 may be any other electric tool having a motor, such as an impact wrench, hammer drill, impact hole saw, impact driver, reciprocating saw, etc., without departing from the scope of the present invention. The method and system of the present invention for protecting an electric tool to prevent or prohibit abuse are applicable to any type of electric tool.

Although the illustrated electric tool 100 comprises a battery 50, the electric tool 100 of the present invention may also be in a form that is connected to an external power supply. In this case, the electric tool has a power connection cord. During use, it is only necessary to connect the power connection cord to the external power supply. In addition, the electric tool 100 of the present invention may also comprise both the battery 50 and a power connection cord, wherein the battery serves as a backup or secondary power supply.

In one embodiment, the battery 50 of the electric tool 100 is a rechargeable battery. In other embodiments, the battery 50 of the electric tool 100 may be a rechargeable battery such as a lead battery, a nickel-metal hydride battery, a nickelcadmium battery, or a lithium-ion battery. It should be understood, however, that the battery 50 may comprise any other type of battery without departing from the scope of the present invention.

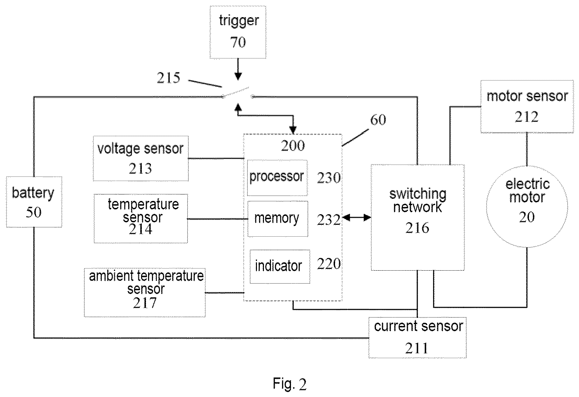

As shown in Fig. 1, the electric tool 100 further comprises a trigger 70; the trigger 70 is selectively pressed and released by a user to selectively apply power from a power supply (e.g. the battery 50 or an AC wall socket power supply), so as to drive the electric motor. The electric motor 20 is energized based on the position of the trigger 70. When the trigger 70 is pressed, the electric motor 20 is energized, and when the trigger 70 is released, the electric motor 20 is de-energized. In the illustrated embodiment, the trigger 70 extends downwards partially along the length of a gripped part; however, in other embodiments, the trigger 70 may extend downwards along the entire length of the gripped part, or may be positioned elsewhere on the electric tool 100. The trigger 70 is movably coupled to the gripped part, such that the trigger 70 moves relative to the housing 10. The trigger 70 may be coupled to a push rod (not shown), which may be engaged with a trigger switch 215 (see Fig. 2). When the user presses the trigger 70, the trigger 70 moves toward the gripped part in a first direction. The trigger 70 is biased (e.g. with a spring), such that when the trigger 70 is released by the user, the trigger 70 moves in a second direction away from the gripped part. When the user presses the trigger 70, the push rod activates the trigger switch 215, and when the user releases the trigger 70, the trigger switch 215 is deactivated.

According to one embodiment, the trigger switch 215 may be a mechanical switch. When the trigger switch 215 is turned on, current from the battery 50 is supplied to the electric motor 20 through the trigger switch 215. In other embodiments, the trigger switch may only be a signal switch, and not pass current. The control assembly 60 controls a switching network 216 (Fig. 2) based on a signal of the trigger switch, thereby selectively supplying current from the battery 50 to the electric motor 20. In this case, the trigger switch comprises, for example, a transistor. In such an embodiment, the trigger 70 may not comprise a push rod for activating a mechanical switch, and the trigger switch 215 may be activated by, for example, a position sensor (e.g. a Hall effect sensor), which relays information about the relative position of the trigger 70 to the housing or the trigger switch 215.

Fig. 2 shows a simplified block diagram of the electric tool 10. The electric tool 10 comprises a system 200 for protecting the electric tool 10 to prevent or prohibit abuse according to the present invention. According to one embodiment, the system 200 may be part of the control assembly 60. It should be understood, however, that the system 200 may be a separate system from control assembly 60, without departing from the scope of the present invention.

As shown in Fig. 2, the electric tool 10 may comprise the switching network 216, at least one sensor, the system 200, and the trigger switch 215.

The switching network 216 enables the control assembly 60 to control operation of the electric motor 20. Typically, when the trigger 70 is pressed (as indicated by the output of the trigger switch 215), current is supplied from the battery 50 to the electric motor 20 via the switching network 216. When the trigger 70 is not pressed, no current is supplied from the battery 50 to the electric motor 20. According to another embodiment, the trigger switch may only be a signal switch, and not pass current. The control assembly 60 controls the switching network 216 (Fig. 2) based on a signal of the trigger switch, thereby selectively supplying current from the battery 50 to the electric motor 20. The switching network 216 may also comprise a rectifier, a buck controller, a filter, etc. The switching network 216 may regulate the power received from the power supply and provide an appropriate level of power to the electric motor 20 of the electric tool 100. In some embodiments, the power supply may be the battery 50. In other embodiments, the switching network 216 may receive AC power (e.g. 120V/60Hz) from a tool plug coupled to a standard wall socket. In such cases, the switching network 216 then filters, regulates and rectifies the received power to output DC power. Although not shown, the control assembly 60 of the electric tool 100 is also electrically coupled to a suitable power supply, such that the power supply provides power to the control assembly 60.

In response to the control assembly 60 receiving an activation signal from the trigger switch 215, the control assembly 60 activates the switching network 216 to provide power to the electric motor 20. According to another embodiment, the control assembly 60 may also selectively activate the switching network 216 to provide power to the electric motor 20 based on another signal. The switching network 216 controls the amount of current available to the electric motor 20, thereby controlling the speed and torque output of the electric motor 20. The switching network 216 may comprise an FET, a bipolar transistor, or other types of electrical switches. For example, the switching network 216 may comprise a six-FET bridge, for receiving pulse width modulated (PWM) signals from the control assembly 60 to drive the electric motor 20.

At least one sensor is coupled to the control assembly 60, and communicates to the control assembly 60 various signals indicating different parameters of the electric tool 100 or electric motor 20. The at least one sensor may comprise a current sensor 211, a motor sensor 212 (also referred to as a speed sensor), a voltage sensor 213, an ambient temperature sensor 217 and a tool temperature sensor 214. It should be understood that the electric tool 10 may comprise any other sensor, such as a vibration sensor, distance sensor, torque sensor, etc., without departing from the scope of the present invention.

The motor sensor 212 detects motor feedback information, and outputs the motor feedback information to the control assembly 60, for example, an indication (e.g. pulse) of when a magnet of the motor rotor rotates over a surface of the motor sensor 212. Based on the motor feedback information from the motor sensor 212, the control assembly 60 may determine the position, speed and acceleration of the rotor. In response to the motor feedback information and the signal from the trigger switch 215, the control assembly 60 sends control signals to control the switching network 216 to drive the electric motor 20; for example, by selectively enabling and disabling FETs of the switching network 216, power received via the battery 50 is selectively applied to stator coils of the electric motor 20, to cause rotation of the rotor thereof. The control assembly 60 uses the motor feedback information to ensure that the control signals reach the switching network 216 with appropriate timing, and in some cases, provides closed loop feedback to control the speed of the electric motor 20 at a desired level. According to one embodiment, the motor sensor 212 is a Hall Effect sensor. It should be understood, however, that the motor sensor 212 may be any other suitable type of sensor, such as a rotary encoder, inductive sensor, etc., without departing from the scope of the present invention.

The current sensor 211 detects the current conveyed to the electric motor 20, and outputs current information to the control assembly 60. Based on the current information from the current sensor 211, the control assembly 60 sends control signals to control the switching network 216 to drive the electric motor 20, e.g. by selectively enabling and disabling FETs of the switching network 216.

The tool temperature sensor 214 detects the temperature of electronic components, and outputs temperature information to the control assembly 60. Based on the temperature information from the tool temperature sensor 214, the control assembly 60 sends control signals to control the switching network 216 to drive the electric motor 20, e.g. by selectively enabling and disabling FETs of the switching network 216.

The voltage sensor 213 detects the voltage of the battery 50, and outputs voltage information to the control assembly 60. Based on the voltage information from the voltage sensor 213, the control assembly 60 sends control signals to control the switching network 216, e.g. to disable FETs of the switching network 216 when the voltage of the battery 50 is too low.

The ambient temperature sensor 217 detects the temperature of the operating environment of the electric tool. When the temperature measured by the ambient temperature sensor 217 is higher than a predetermined ambient temperature threshold (for example but not limited to 30°C) and/or the temperature measured by the tool temperature sensor 214 is higher than a predetermined tool temperature threshold (for example but not limited to 60°C), the control assembly 60 sets the operating mode of the electric tool to a high-temperature operating mode.

According to one embodiment of the present invention, the control assembly 60 and/or system 200 comprises a processor 230, a memory 232 and an indicator 220.

The indicator 220 turns on and off or otherwise communicates information based on different states of the electric tool 100. The indicator 220 may comprise, for example, one or more light emitting diode ("LED"), vibrator, speaker or display screen. The indicator 220 may be configured to display a state of the electric tool 100 or information relating to the electric tool 100. For example, the indicator 220 is configured to indicate an electrical characteristic of the electric tool 100, a state of the electric tool 100, or a mode of the electric tool 100. The indicator 220 may also comprise an element that communicates information to a user by auditory or haptic output. For example, the indicator 220 may comprise a separate vibration generator. According to another embodiment, the electric tool 100 may also not comprise the indicator 220. For example, the control assembly 60 and/or system 200 may generate a pulse signal for the switching network, to cause the electric motor 20 to selectively vibrate, so as to indicate a specific fault mode.

The memory 232 may comprise volatile and non-volatile memory in read-only memory (ROM), random access memory (RAM) and keep alive memory (KAM). KAM is persistent or non-volatile memory that can be used to store various operating variables when a CPU is powered off. Any of a number of known memory devices may be used to implement a computer-readable storage device or medium, such as PROM (Programmable Read Only Memory), EPROM (Electrical PROM), EEPROM (Electrically Erasable PROM), flash memory, or any other electrical, magnetic, optical or combination memory device that is capable of storing data.

Instructions for implementing the method according to the present invention for protecting the electric tool 10 to prevent or prohibit abuse may be stored in the memory 232 of the control assembly 60. The instructions may comprise, for example, firmware, one or more application programs, one or more program modules, and other executable instructions. The control assembly 60 is configured to retrieve from the memory and execute instructions related to the control process and method described herein, etc. The control assembly 60 is also configured to store electric tool information on the memory 232, comprising operating data, information identifying the type of tool, a unique identifier for a particular tool, and other information relating to operation or maintenance of the electric tool 100. Tool usage information (e.g. current level, motor speed, motor acceleration, motor direction, etc.) may be obtained or inferred from data outputted by at least one sensor.

The processor 230 receives various types of information from at least one sensor, and controls the switching network 216 and/or trigger switch 215 accordingly. The processor 230 may comprise an application specific integrated circuit (ASIC); a digital, analog or mixed analog/digital discrete circuit; a digital, analog or mixed analog/digital integrated circuit; a combinational logic circuit; a field programmable gate array (FPGA); or a code-executing processor circuit (shared, dedicated or group).

In addition, the electric tool may also comprise a wireless communication controller (not shown), such as a Bluetooth controller. The Bluetooth controller communicates with an external device using the Bluetooth protocol. Thus, in the illustrated embodiment, the external device and the electric tool 100 are within communication range of each other (i.e. in proximity) when they exchange data. In other embodiments, the wireless communication controller communicates over different types of wireless networks using other protocols (e.g. Wi-Fi, cellular protocols, proprietary protocols, etc.). For example, the wireless communication controller may be configured to communicate over a wide or local area network such as the internet via Wi-Fi, or to communicate over a piconet (e.g. using infrared or NFC communication). Communication via the wireless communication controller may be encrypted, to protect data exchanged between the electric tool 100 and the external device/network from third parties.

Although not shown, the system 200 also comprises a real time clock (RTC). The RTC counts up/down and keeps time independently of other electric tool components. The RTC receives power from the battery 50 when the battery 50 is connected to the electric tool 100, and the RTC receives power from a backup power supply when the battery 50 is not connected to the electric tool 100. Having the RTC as an independently powered clock enables time stamping and security features of operating data (stored in the memory 232 for subsequent export); thus, the user sets a predetermined time, and when the time of the RTC exceeds the set predetermined time, the system 200 controls the operation of the electric tool 100.

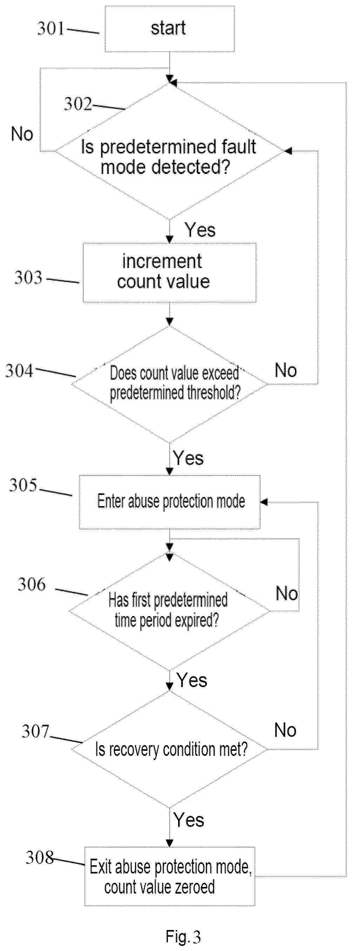

Fig. 3 shows a flow chart of a method according to the present invention for protecting the electric tool 10 to prevent or prohibit abuse. The method may be executed in the control assembly 60 and/or the system 200.

The method starts at step 301. In step 302, the method determines whether a predetermined fault mode is detected. In one embodiment, the control assembly 60 and/or system 200 detects a first predetermined fault mode when a speed measured by the speed sensor is lower than a first predetermined speed threshold. In another embodiment, the control assembly 60 and/or system 200 detects a second predetermined fault mode when a temperature measured by the tool temperature sensor 214 exceeds a first predetermined temperature threshold. In another embodiment, the control assembly 60 and/or system 200 detects a third predetermined fault mode when a current measured by the current sensor 211 exceeds a first predetermined current threshold. However, it should be understood that the present invention is suitable for any other fault modes, such as undervoltage operation, etc., without departing from the scope of the present invention.

If step 302 is "Yes", the method proceeds to step 303. In step 303, the method increments a count value. According to an embodiment of the present invention, the count value may be incremented by 1 each time a predetermined fault mode is detected within a predetermined time period. According to another embodiment of the present invention, the count value may be a weighted sum of the number of times a predetermined fault mode occurs. According to one embodiment, the same weights may be used. According to another embodiment, different weights are used for different predetermined fault modes. For example, if the first predetermined fault mode (low speed fault mode) is detected, the count value is incremented by 3; if the second predetermined fault mode (high temperature fault mode) is detected, the count value is incremented by 1; if the third predetermined fault mode (overcurrent fault mode) is detected, the count value is incremented by 2. However, it should be understood that other suitable values may be used for the fault mode weights; for example, but without limitation, a weight of 1.5 or 2.5, etc. may be used for the first predetermined fault mode, and a weight of 1.5 or 1.8, etc. may be used for the third predetermined fault mode, without departing from the scope of the present invention. According to another embodiment, the count value may be incremented with different weights for different fault severities. For example, when the temperature measured by the tool temperature sensor 214 is greater than the first predetermined temperature threshold and less than a second predetermined temperature threshold, the count value may be incremented with a first temperature weight; when the temperature measured by the tool temperature sensor 214 is greater than the second predetermined temperature threshold, the count value may be incremented with a second temperature weight. According to one embodiment, the first temperature weight may be 1, and the second temperature weight may be, for example, 1.2. However, it should be understood that other suitable values may be used for the second temperature weight, for example but not limited to 1.1, 1.3, 1.4, 1.5 or 2, etc., without departing from the scope of the present invention. For example, when the current measured by the current sensor 211 is greater than the first predetermined current threshold and less than a second predetermined current threshold, the count value may be incremented with a first current weight; when the current measured by the current sensor 211 is greater than the second predetermined current threshold, the count value may be incremented with a second current weight. According to one embodiment, the first current weight may be 1, and the second current weight may be, for example, 1.2. However, it should be understood that other suitable values may be used for the second current weight, for example but not limited to 1.1, 1.3, 1.4, 1.5 or 2, etc., without departing from the scope of the present invention. According to another embodiment, the count value may be incremented with different weights for different times. For example, for the same fault mode, the weight may progressively increase over time, so that recent faults have a greater impact on the count value. For example, when the predetermined time period is 100 seconds, the weight may be increased from a first time weight at the 1st second to a second time weight at the 100th second. According to one embodiment, the first time weight may be 1, and the second time weight may be, for example, 1.2. However, it should be understood that other suitable values may be used for the second time weight, for example but not limited to 1.1, 1.3, 1.4, 1.5 or 2, etc., without departing from the scope of the present invention. In addition, the weight may progressively increase linearly from the 1st second to the 100th second, but it should be understood that the weight may also progressively increase nonlinearly, without departing from the scope of the present invention. According to another embodiment, the count value may be incremented with different weights for different ambient temperatures and/or tool temperatures. For example, when the temperature measured by the ambient temperature sensor 217 is greater than a first predetermined ambient temperature threshold (e.g. 25°C) and less than a second predetermined ambient temperature threshold (e.g. 30°C) and/or the temperature measured by the tool temperature sensor 214 is higher than a first predetermined tool temperature threshold (for example but not limited to 60°C) and less than a second predetermined ambient temperature threshold (for example, 80°C), the weight of a stall fault of the electric motor is a first ambient temperature weight and/or a first tool temperature weight; when the temperature measured by the ambient temperature sensor 217 is greater than a second predetermined ambient temperature threshold (for example, 30°C) and/or the temperature measured by the tool temperature sensor 214 is higher than a second predetermined ambient temperature threshold (e.g. 80°C), the weight of the stall fault of the electric motor is a second ambient temperature weight and/or a second tool temperature weight. According to one embodiment, the first ambient temperature weight and/or the first tool temperature weight may be 1.1, and the second ambient temperature weight and/or the second tool temperature weight may be, for example, 1.2. However, it should be understood that other suitable values may be used for the first ambient temperature weight and/or the first tool temperature weight and the second ambient temperature weight and/or the second tool temperature weight, without departing from the scope of the present invention.

If step 302 is "No", the method continues with step 302. After step 303, the method proceeds to step 304. In step 304, the method determines whether the count value exceeds a predetermined threshold. If step 304 is "No", the method returns to step 302. If step 304 is "Yes", the method proceeds to step 305. In step 305, the method enters an abuse protection mode. According to one embodiment, the abuse protection mode comprises setting the trigger switch 215 and/or the switching network 216 to a disconnected state, and starting a timer. It should be understood that the abuse protection mode may comprise any other suitable remedial measures. For example, the abuse protection mode comprises setting the switching network 216 to a disabled state, and starting a timer. The timer is set for a first predetermined time period, and begins to count down. The first predetermined time period may be any suitable period of time, for example 10 minutes. However, it should be understood that the first predetermined time period may be another time period, such as 20 minutes, 30 minutes, etc.

The abuse protection mode may also comprise any suitable alerting measures. For example, the abuse protection mode may activate an LED of the indicator, to alert the user that the abuse protection mode has been entered by flashing vigorously. In addition, the abuse protection mode may activate a vibrator of the indicator, to alert the user that the abuse protection mode has been entered by vibrating. In addition, the abuse protection mode may activate a speaker of the indicator, to alert the user that the abuse protection mode has been entered by voice. In addition, the abuse protection mode may activate a display screen of the indicator, to alert the user that the abuse protection mode has been entered by image and/or text.

From step 305, the method proceeds to step 306. In step 306, the method determines whether the first predetermined time period has expired. If step 306 is "Yes", the method proceeds to step 307. If step 306 is "No", the method continues with step 306.

In step 307, the method determines whether the electric tool 100 meets a recovery condition. According to one embodiment, the recovery condition is met when the temperature measured by the tool temperature sensor 214 is less than a third predetermined temperature threshold. According to one embodiment, the recovery condition is met when the temperature measured by the tool temperature sensor 214 is less than a third predetermined temperature threshold and/or the trigger 70 is released. It should be understood, however, that the recovery condition may comprise any other suitable condition, without departing from the scope of the present invention. If step 307 is "Yes", the method proceeds to step 308. If step 307 is "No", the method returns to step 305.

In step 308, the method exits the abuse protection mode, and the count value is zeroed. From step 308, the method returns to step 302.

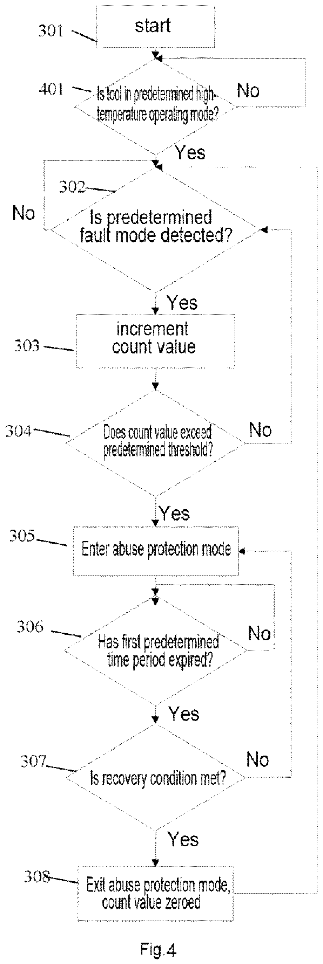

Fig. 4 is a flowchart of a method for protecting an electric tool according to another embodiment of the present invention. Compared with Fig. 3, only step 401 is added in the embodiment in Fig. 4. For the sake of brevity, the rest of the steps that are the same as those in Fig. 3 will not be repeated. In step 401, the method determines whether the electric tool 100 is in a predetermined high-temperature operating mode. For example, when the temperature measured by the ambient temperature sensor 217 is higher than a predetermined ambient temperature threshold (such as but not limited to 30°C) and/or the temperature measured by the tool temperature sensor 214 is higher than a predetermined tool temperature threshold (such as but not limited to 60°C), the electric tool 100 is in a predetermined high-temperature operating mode. If step 401 is "Yes", the method proceeds to step 302. If step 401 is "No", the method returns to step 401.

In the present application, the term "processor" or the term "controller" may be replaced with the term "module". The term "module" may refer to each of the following, be part of each of the following, or comprise each of the following: application specific integrated circuits (ASICs); digital, analog or mixed analog/digital discrete circuits; digital, analog or mixed analog/digital integrated circuits circuits; combinational logic circuits; field programmable gate arrays (FPGAs); processor circuits (shared, dedicated, or group) that execute code; memory circuits (shared, dedicated, or group) that store code executed by processor circuits; other suitable hardware components that provide said functions; or a combination of some or all of the above.

The module may comprise one or more interface circuits. In some examples, the interface circuit may comprise a wired or wireless interface connected to a local area network (LAN), the internet, a wide area network (WAN), or a combination thereof. The functionality of any given module of the present disclosure may be distributed among multiple modules connected via interface circuitry. For example, multiple modules may allow load balancing. In a further example, a server (also referred to as remote or cloud) module may perform some functions on behalf of a client module.

As used above, the term "code" may comprise software, firmware and/or microcode, and may refer to programs, routines, functions, classes, data structures and/or objects. The term "shared processor circuit" encompasses a single processor circuit executing some or all code from multiple modules. The term "group processor circuitry" encompasses processor circuitry that executes some or all code from one or more modules in combination with additional processor circuitry. References to multiple processor circuits encompass multi-processor circuitry on discrete dies, multiple processor circuits on a single die, multiple cores of a single processor circuit, multiple threads of a single processor circuit, or combinations thereof. The term "shared memory circuit" encompasses a single memory circuit that stores some or all code from multiple modules. The term "group memory circuit" encompasses memory circuits that store some or all code from one or more modules in combination with additional memory.

The processes, methods or algorithms disclosed herein may be submitted to and/or implemented by a processing device, controller or computer, wherein the processing device, controller or computer may comprise any existing programmable electronic control unit or dedicated electronic control unit. Similarly, the processes, methods or algorithms may be stored in many forms as data and instructions executable by a controller or computer, comprising but not limited to: information permanently stored on a non-writable storage medium (e.g. a ROM device) and information variably stored on writable storage media (e.g. floppy disks, magnetic tape, CDs, RAM devices, and other magnetic and optical media). The processes, methods or algorithms may also be implemented as software-executable objects. Optionally, the processes, methods or algorithms may be implemented in whole or in part using suitable hardware components, such as Application Specific Integrated Circuits (ASICs), Field Programmable Gate Arrays (FPGAs), state machines, controllers or other hardware components or devices, or a combination of hardware, software and firmware components. Such example devices may be part of the electric tool, or located outside the electric tool and in remote communication with a device on the electric tool.

The present invention has described certain preferred embodiments and variants thereof. After reading and understanding this Description, those skilled in the art may think of other variants and changes. Therefore, the present invention is not limited to particular embodiments disclosed as the best modes for implementing the present invention, and will comprise all embodiments falling within the scope of the claims.

## Claims

1. A system for protecting an electric tool to prevent abuse, comprising:
at least one sensor, for detecting at least one operating state of the electric tool; and
a processor, configured to:
determine whether a predetermined fault mode is detected, based on at least one operating state of the electric tool;
increment a count value if a predetermined fault mode is detected;
determine whether the count value exceeds a predetermined threshold; and
enter an abuse protection mode if the count value exceeds the predetermined threshold.

2. The system as claimed in claim 1, **characterized in that** the at least one sensor comprises:
a speed sensor, for measuring a speed of an electric motor; and/or
a current sensor, for measuring a current passing through an electric motor of the electric tool; and/or
a tool temperature sensor, for measuring a temperature of an electronic component of the electric tool.

3. The system as claimed in claim 2, **characterized in that** the processor is further configured to:
determine whether the speed measured by the speed sensor is lower than a first predetermined speed threshold;
detect a first predetermined fault mode if the speed measured by the speed sensor is lower than the first predetermined speed threshold; and/or
determine whether the current measured by the current sensor exceeds a first predetermined current threshold;
detect a second predetermined fault mode if the current measured by the current sensor exceeds the first predetermined current threshold; and/or
determine whether the temperature measured by the tool temperature sensor exceeds a first predetermined temperature threshold;
detect a third predetermined fault mode if the temperature measured by the tool temperature sensor exceeds the first predetermined temperature threshold.

4. The system as claimed in claim 1, **characterized in that** the abuse protection mode comprises setting a trigger switch and/or a switching network to a disconnected state, and starting a timer.

5. The system as claimed in claim 4, **characterized in that** the processor is further configured to:
determine whether the electric tool meets a recovery condition, when timing of the timer has expired; and
exit the abuse protection mode if the electric tool meets the recovery condition.

6. The system as claimed in claim 3, **characterized in that** the count value is a weighted sum of the number of times a predetermined fault mode occurs.

7. The system as claimed in claim 6, **characterized in that** the processor is configured to use different weights for different predetermined fault modes.

8. The system as claimed in claim 6, **characterized in that** the processor is configured to use different weights for different times, or use different weights for different ambient temperatures and/or tool temperatures.

9. The system as claimed in claim 5, **characterized in that** the processor is further configured to:
determine whether the temperature measured by the tool temperature sensor is less than a third predetermined temperature threshold; and
the recovery condition is met if the temperature measured by the tool temperature sensor is less than the third predetermined temperature threshold and/or a trigger is released.

10. The system as claimed in claim 1, **characterized in that** the abuse protection mode further comprises enabling an indicator.

11. An electric tool, comprising:
a housing;
an electric motor;
a transmission mechanism driven by the electric motor; and
the system as claimed in any one of claims 1-10.

12. A method for protecting an electric tool to prevent abuse, comprising:
detecting at least one operating state of the electric tool;
determining whether a predetermined fault mode is detected, based on at least one operating state of the electric tool;
incrementing a count value if a predetermined fault mode is detected;
determining whether the count value exceeds a predetermined threshold; and
entering an abuse protection mode if the count value exceeds the predetermined threshold.

13. The method as claimed in claim 12, **characterized in that** the method further comprises:
measuring, by a speed sensor, a speed of the electric motor;
determining whether the speed measured by the speed sensor is lower than a first predetermined speed threshold;
detecting a first predetermined fault mode if the speed measured by the speed sensor is lower than the first predetermined speed threshold; and/or
measuring, by a current sensor, a current passing through an electric motor of the electric tool;
determining whether the current measured by the current sensor exceeds a first predetermined current threshold;
detecting a second predetermined fault mode if the current measured by the current sensor exceeds the first predetermined current threshold; and/or
measuring, by a tool temperature sensor, a temperature of an electronic component of the electric tool;
determining whether the temperature measured by the tool temperature sensor exceeds a first predetermined temperature threshold;
detecting a third predetermined fault mode if the temperature measured by the tool temperature sensor exceeds the first predetermined temperature threshold.

14. The method as claimed in claim 12, **characterized in that** the abuse protection mode comprises setting a trigger switch and/or a switching network to a disconnected state, and starting a timer.

15. The method as claimed in claim 14, **characterized in that** the method further comprises:
determining whether the electric tool meets a recovery condition, when timing of the timer has expired; and
exiting the abuse protection mode if the electric tool meets the recovery condition.

16. The method as claimed in claim 13, **characterized in that** the count value is a weighted sum of the number of times a predetermined fault mode occurs.

17. The method as claimed in claim 16, **characterized in that** different weights are used for different predetermined fault modes.

18. The method as claimed in claim 16, **characterized in that** different weights are used for different times, or different weights are used for different ambient temperatures and/or tool temperatures.

19. The method as claimed in claim 15, **characterized in that** the method further comprises:
determining whether the temperature measured by the tool temperature sensor is less than a third predetermined temperature threshold; and
the recovery condition is met if the temperature measured by the tool temperature sensor is less than the third predetermined temperature threshold and/or a trigger is released.

20. The method as claimed in claim 12, **characterized in that** the abuse protection mode further comprises enabling an indicator.
